# EUROPÄISCHE PATENTSCHRIFT

(11) **EP 3 413 157 B1**
(45) Veröffentlichungstag und Bekanntmachung des Hinweises auf die Patenterteilung: **05.08.2020**
(21) Anmeldenummer: 17175385.8
(22) Anmeldetag: 09.06.2017
(51) Int. Cl.: G05D 1/02, A01D 34/00, G05D 1/00

(54) **VERFAHREN ZUM BESTIMMEN EINES SPEZIFISCHEN STEUERPARAMETERBEREICHS EINES AUTONOMEN MOBILEN GRÜNFLÄCHENBEARBEITUNGSROBOTERS, VERFAHREN ZUM BETREIBEN EINES AUTONOMEN MOBILEN GRÜNFLÄCHENBEARBEITUNGSROBOTERS, SYSTEM UND AUTONOMER MOBILER GRÜNFLÄCHENBEARBEITUNGSROBOTER**
METHOD FOR DETERMINING A SPECIFIC CONTROL PARAMETER RANGE OF AN AUTONOMOUS MOBILE GREEN AREA PROCESSING ROBOT, METHOD FOR OPERATING AN AUTONOMOUS MOBILE GREEN AREA PROCESSING ROBOT, SYSTEM, AND AUTONOMOUS MOBILE GREEN AREA PROCESSING ROBOT
PROCÉDÉ DE DÉTERMINATION D'UNE ZONE DE PARAMÈTRE DE COMMANDE SPÉCIFIQUE D'UN ROBOT MOBILE ET AUTONOME DE TRAITEMENT D'ESPACES VERTS, PROCÉDÉ DE FONCTIONNEMENT D'UN ROBOT MOBILE ET AUTONOME DE TRAITEMENT D'ESPACES VERTS, SYSTÈME ET ROBOT MOBILE ET AUTONOME DE TRAITEMENT D'ESPACES VERTS

(43) Veröffentlichungstag der Anmeldung: 12.12.2018
(73) Patentinhaber: Andreas Stihl AG & Co. KG, 71336 Waiblingen (DE)
(72) Erfinder: Strohmaier, Andreas, 71554 Weissach (DE); Arenz, Martin Christoph, Dr., 70372 Stuttgart (DE); Zöttl, Samuel, Dr., 6092 Birgiz (AT); Schöpf, Christoph, 6336 Langkampfen (AT)
(74) Vertreter: Patentanwälte Ruff, Wilhelm, Beier, Dauster & Partner mbB

(56) Entgegenhaltungen:
- EP-A2- 1 898 289
- EP-A2- 1 933 467
- CN-A- 103 217 977
- DE-A1-102015 119 501

## Beschreibung

### ANWENDUNGSGEBIET UND STAND DER TECHNIK

Die Erfindung bezieht sich auf ein Verfahren zum Bestimmen eines spezifischen Steuerparameterbereichs eines autonomen mobilen Grünflächenbearbeitungsroboters für eine zu bearbeitende Fläche mit einer spezifischen Form und einer spezifischen Größe, ein Verfahren zum Betreiben eines autonomen mobilen Grünflächenbearbeitungsroboters auf einer zu bearbeitenden Fläche mit einer spezifischen Form und einer spezifischen Größe mit einem solchen Verfahren, ein System, insbesondere zum Ausführen eines solchen Verfahrens, und einen autonomen mobilen Grünflächenbearbeitungsroboter.

Bekannt sind ein autonomer mobiler Rasenmähroboter und ein Verfahren zum Betreiben von diesem.

### AUFGABE UND LÖSUNG

Der Erfindung liegt als Aufgabe die Bereitstellung eines Verfahrens für einen autonomen mobilen Grünflächenbearbeitungsroboter zugrunde, das eine verbesserte Bearbeitung einer zu bearbeitenden Fläche mittels des autonomen mobilen Grünflächenbearbeitungsroboters ermöglicht. Des Weiteren liegt der Erfindung als Aufgabe die Bereitstellung eines Verfahrens zum Betreiben eines autonomen mobilen Grünflächenbearbeitungsroboters auf einer zu bearbeitenden Fläche, eines Systems, insbesondere zum Ausführen des Verfahrens, und eines autonomen mobilen Grünflächenbearbeitungsroboters zugrunde.

Die Erfindung löst diese Aufgabe durch die Bereitstellung eines Verfahrens mit den Merkmalen des Anspruchs 1. Des Weiteren wird die der Erfindung zugrundeliegende Aufgabe durch ein Verfahren mit den Merkmalen des Anspruchs 7, ein System mit den Merkmalen des Anspruchs 8 und einen autonomen mobilen Grünflächenbearbeitungsroboter mit den Merkmalen des Anspruchs 15 gelöst. Vorteilhafte Weiterbildungen und/oder Ausgestaltungen der Erfindung sind in den abhängigen Ansprüchen beschrieben.

Das erfindungsgemäße Verfahren zum Bestimmen eines spezifischen Steuerparameterbereichs eines autonomen mobilen Grünflächenbearbeitungsroboters für eine zu bearbeitende Fläche mit einer spezifischen Form und einer spezifischen Größe, wobei der autonome mobile Grünflächenbearbeitungsroboter dazu ausgebildet ist, seine Bewegung, insbesondere seine Bewegungsrichtung, auf der zu bearbeitenden Fläche in Abhängigkeit von dem spezifischen Steuerparameterbereich zu steuern, weist die Schritte auf: a) Vorgeben der spezifischen Form und der spezifischen Größe der zu bearbeitenden Fläche. b) Bestimmen und/oder Ermitteln, insbesondere automatisches Bestimmen, des spezifischen Steuerparameterbereichs in Abhängigkeit von der vorgegebenen spezifischen Form und der vorgegebenen spezifischen Größe der zu bearbeitenden Fläche.

Das Verfahren ermöglicht, den spezifischen Steuerparameterbereich für die zu bearbeitende Fläche mit der spezifischen Form und der spezifischen Größe zu bestimmen. Somit kann eine verbesserte, insbesondere effizientere und/oder effektivere, autonome Bearbeitung der zu bearbeitenden Fläche mittels des autonomen mobilen Grünflächenbearbeitungsroboters ermöglicht werden, insbesondere eine an die zu bearbeitende Fläche angepasste spezifische Bearbeitung.

Die zu bearbeitende Fläche kann beispielsweise eine Freifläche, insbesondere ein unversiegelter Boden, oder eine Grünfläche sein, wie eine Wiese mit Rasen. Die spezifische Form kann beispielsweise eine Rechteck-Form, eine U-Form oder eine S-Form sein. Die spezifische Größe kann beispielsweise in einem Bereich von unter 500 Quadratmetern (m²) bis zu 4000 m² liegen. Vorteilhafterweise kann die zu bearbeitende Fläche mit der spezifischen Form und der spezifischen Größe ein spezifischer Garten eines spezifischen Benutzers und/oder Kundens sein.

Der spezifische Steuerparameterbereich kann eine Häufigkeitsverteilung aufweisen, mit der ein spezifischer Steuerparameterwert aus einem, insbesondere zulässigen, Steuerparameterbereich, insbesondere mittels eines Zufallsalgorithmus ausgewählt werden kann. Zusätzlich oder alternativ kann der spezifische Steuerparameterbereich einen spezifischen Zeitbereich aufweisen, in welchem der Grünflächenbearbeitungsroboter sich in eine Richtung bewegen kann und nach welcher er seine Richtung ändern kann.

Das Vorgeben des Schritts a) kann mindestens teilweise, insbesondere vollständig, automatisch erfolgen. Vorteilhafterweise kann dem Schritt a) ein Vorgeben einer Adresse, insbesondere des Benutzers, vorhergehen, wobei im Schritt a) in Abhängigkeit von der Adresse automatisch die spezifische Form und die spezifische Größe der zu bearbeitenden Fläche bestimmt und für den Schritt b) vorgegeben werden kann. Vorteilhafterweise kann dies mittels eines, insbesondere internetbasierten, Kartendiensts erfolgen. Vorteilhafterweise kann der Schritt b) zeitlich nach dem Schritt a) ausgeführt werden. Das Verfahren kann bei und/oder von einem Hersteller und/oder Fachhändler für autonome mobile Grünflächenbearbeitungsroboter ausgeführt werden.

In einer Weiterbildung der Erfindung weist der Schritt b) auf: Auswählen des spezifischen Steuerparameterbereichs aus einem zulässigen Steuerparameterbereich. Insbesondere kann der spezifische Steuerparameterbereich relativ kleiner als der zulässige relativ größere Steuerparameterbereich sein. Vorteilhafterweise kann der spezifische Steuerparameterbereich einen zusammenhängenden Steuerparameterbereich umfassen oder sein.

In einer Weiterbildung der Erfindung weist der spezifische Steuerparameterbereich einen spezifischen Wegfahrwinkelbereich und/oder einen spezifischen Drehwinkelbereich auf. Die zu bearbeitende Fläche mit der spezifischen Form und der spezifischen Größe ist von einer Begrenzung umgeben. Der autonome mobile Grünflächenbearbeitungsroboter ist dazu ausgebildet, seine Bewegung von der Begrenzung weg unter einem Winkel aus dem spezifischen Wegfahrwinkelbereich zu steuern. Zusätzlich oder alternativ ist der autonome mobile Grünflächenbearbeitungsroboter dazu ausgebildet, eine Drehung seiner Bewegungsrichtung an der Begrenzung um einen Drehwinkel aus dem spezifischen Drehwinkelbereich zu steuern. Der Schritt b) weist auf: Bestimmen des spezifischen Wegfahrwinkelbereichs und/oder des spezifischen Drehwinkelbereichs in Abhängigkeit von der vorgegebenen spezifischen Form und der vorgegebenen spezifischen Größe der zu bearbeitenden Fläche. Insbesondere braucht die zu bearbeitende Fläche, wenn das Verfahren ausgeführt wird, noch nicht von der Begrenzung umgeben sein. Die Begrenzung kann bisher nur geplant und/oder beabsichtigt sein. Es kann zeitlich ausreichen, wenn die Fläche bei der autonomen Bearbeitung mittels des autonomen mobilen Grünflächenbearbeitungsroboters von der Begrenzung umgeben sein kann. Die Begrenzung kann durch eine Grenzwand und/oder einen Grenzzaun definiert sein. Die Begrenzung kann als Begrenzungsrand bezeichnet werden. Der spezifische Wegfahrwinkelbereich kann eine Häufigkeitsverteilung aufweisen, mit welcher der Winkel aus einem zulässigen Wegfahrwinkelbereich ausgewählt werden kann. Beispielsweise kann ein zulässiger Wegfahrwinkelbereich einen Bereich von 0 bis 180 Grad umfassen. Zusätzlich oder alternativ kann der spezifische Wegfahrwinkelbereich aus dem zulässigen Wegfahrwinkelbereich ausgewählt werden. Insbesondere kann der spezifische Wegfahrwinkelbereich relativ kleiner als der zulässige relativ größere Wegfahrwinkelbereich sein. Vorteilhaftweise kann der spezifische Wegfahrwinkelbereich jeweils den Winkel und seinen an einer zur Begrenzung Senkrechten gespiegelten Winkel umfassen. Der spezifische Drehwinkelbereich kann eine Häufigkeitsverteilung aufweisen, mit welcher der Drehwinkel aus einem zulässigen Drehwinkelbereich ausgewählt werden kann. Beispielsweise kann ein zulässiger Drehwinkelbereich einen Bereich von -180 bis 0 und von 0 bis 180 Grad umfassen. Zusätzlich oder alternativ kann der spezifische Drehwinkelbereich aus dem zulässigen Drehwinkelbereich ausgewählt werden. Insbesondere kann der spezifische Drehwinkelbereich relativ kleiner als der zulässige relativ größere Drehwinkelbereich sein. Vorteilhaftweise kann der spezifische Drehwinkelbereich jeweils den Drehwinkel und seinen an seiner ursprünglichen oder einfallenden Bewegungsrichtung gespiegelten Drehwinkel umfassen. In anderen Worten: der spezifische Drehwinkelbereich kann jeweils den Drehwinkel ausgehend von der ursprünglichen Bewegungsrichtung in eine Drehrichtung und den Drehwinkel ausgehend von der ursprünglichen Bewegungsrichtung in eine entgegengesetzte Drehrichtung umfassen.

In einer Ausgestaltung der Erfindung weist der spezifische Wegfahrwinkelbereich eine Winkelbreite von maximal 120 Grad auf, insbesondere von maximal 60 Grad, insbesondere von maximal 20 Grad, insbesondere von maximal 10 Grad. Vorteilhaftweise kann die Winkelbreite den Winkel und seinen an der zur Begrenzung Senkrechten gespiegelten Winkel umfassen. Insbesondere kann die Winkelbreite eine zusammenhängende Winkelbreite auf der einen Seite der Senkrechten und eine zusammenhängende Winkelbreite gespiegelt auf der anderen Seite der Senkrechten umfassen oder sein. Zusätzlich oder alternativ liegt der spezifische Drehwinkelbereich in einem Betragbereich von 10 Grad bis 120 Grad, insbesondere im Betragbereich von 30 Grad bis 100 Grad, insbesondere im Betragbereich von 40 Grad bis 90 Grad. Der Betragbereich kann den Drehwinkel und seinen an der ursprünglichen Bewegungsrichtung gespiegelten Drehwinkel umfassen.

In einer Weiterbildung der Erfindung weist der Schritt b) auf: Simulieren einer Abfolge von gesteuerten Bewegungen des autonomen mobilen Grünflächenbearbeitungsroboters auf der zu bearbeitenden Fläche mit der spezifischen Form und der spezifischen Größe jeweils in Abhängigkeit von verschiedenen Steuerparameterbereichen. Bestimmen und/oder Ermitteln einer Zeitdauer, in welcher ein Großteil der zu bearbeitenden Fläche von dem Grünflächenbearbeitungsroboter abgedeckt worden ist, jeweils für die verschiedenen Steuerparameterbereiche. Auswählen eines der verschiedenen Steuerparameterbereiche, für welchen die Zeitdauer am kürzesten ist, als den spezifischen Steuerparameterbereich. Dies ermöglicht, einen für die spezifische Fläche besonders geeigneten spezifischen Steuerparameterbereich zu bestimmen. Vorteilhafterweise kann das Simulieren, das Bestimmen und/oder das Auswählen mittels einer Recheneinheit ausgeführt werden. Das Simulieren kann dann als Computersimulation bezeichnet werden. Dies kann einen Aufwand für den Hersteller, den Fachhändler und/oder den Kunden gering halten und/oder zugleich ein positives Erlebnis für den Kunden darstellen. Verschiedene Steuerparameterbereiche kann bedeuten, dass die verschiedenen Steuerparameterbereiche jeweils mindestens teilweise, insbesondere vollständig, voneinander verschiedene Steuerparameter umfassen können oder ein relativ kleinerer Bereich von einem ihn umfassenden relativ größeren Bereich verschieden sein kann. Vorteilhafterweise kann der Grünflächenbearbeitungsroboter ein Bearbeitungswerkzeug zum Bearbeiten der zu bearbeitenden Fläche aufweisen. Das Bearbeitungswerkzeug kann eine Bearbeitungsbreite definieren, wobei die Bearbeitungsbreite die von dem Grünflächenbearbeitungsroboter abgedeckte Fläche bestimmen und/oder beeinflussen kann. Ein Großteil der zu bearbeitenden Fläche kann 90 Prozent (%) der Fläche bedeuten, insbesondere 95 %, vorteilhafterweise 100 %. Das Simulieren der Abfolge von gesteuerten Bewegungen des Grünflächenbearbeitungsroboters kann mit einer konstanten Bewegungsgeschwindigkeit des Grünflächenbearbeitungsroboters erfolgen. Die Bewegungsgeschwindigkeit kann die Zeitdauer bestimmen und/oder beeinflussen.

In einer Weiterbildung der Erfindung weist das Verfahren den Schritt auf: c) Übertragen, insbesondere automatisches und/oder drahtloses Übertragen, des bestimmten spezifischen Steuerparameterbereichs in den autonomen mobilen Grünflächenbearbeitungsroboter. Vorteilhafterweise kann der Schritt c) zeitlich nach dem Schritt b) ausgeführt werden.

Des Weiteren bezieht sich die Erfindung auf ein Verfahren zum Betreiben des autonomen mobilen Grünflächenbearbeitungsroboters auf der zu bearbeitenden Fläche mit der spezifischen Form und der spezifischen Größe. Das erfindungsgemäße Verfahren weist die Schritte auf: Bestimmen des spezifischen Steuerparameterbereichs des autonomen mobilen Grünflächenbearbeitungsroboters nach dem zuvor beschriebenen Verfahren. d) Steuern, insbesondere automatisches Steuern, der Bewegung des Grünflächenbearbeitungsroboters auf der zu bearbeitenden Fläche mit der spezifischen Form und der spezifischen Größe in Abhängigkeit von dem bestimmten spezifischen Steuerparameterbereich.

Das Verfahren ermöglicht die verbesserte, insbesondere effizientere und/oder effektivere, autonome Bearbeitung der zu bearbeitenden Fläche mittels des autonomen mobilen Grünflächenbearbeitungsroboters.

Autonom bearbeiten kann bedeuten, dass der autonome mobile Grünflächenbearbeitungsroboter dazu ausgebildet sein kann, sich auf der zur bearbeitenden Fläche und/oder in seiner Umgebung selbstständig, selbsttätig, selbstbestimmt, selbstgesteuert und/oder unabhängig von dem Benutzer zu bewegen und/oder zu agieren und/oder zumindest einen Parameter, wie insbesondere einen Streckenparameter, und/oder einen Umkehrpunkt auszuwählen. Autonom bearbeiten kann zusätzlich oder alternativ bedeuten, dass der Grünflächenbearbeitungsroboter dazu ausgebildet sein kann, selbstständig mit einem Bearbeiten zu beginnen und/oder das Bearbeiten zu beenden. Der Grünflächenbearbeitungsroboter braucht nicht durch den Benutzer gesteuert zu sein, insbesondere nicht ferngesteuert. In anderen Worten: der Grünflächenbearbeitungsroboter kann insbesondere ohne menschliche Steuerung und/oder Führung die Fläche bearbeiten. Der autonome mobile Grünflächenbearbeitungsroboter kann als Serviceroboter und/oder Dienstleistungsroboter bezeichnet werden.

Vorteilhafterweise kann der Grünflächenbearbeitungsroboter dazu ausgebildet sein, seine Bewegung auf der zu bearbeitenden Fläche derart zu steuern, dass der Grünflächenbearbeitungsroboter auf der zu bearbeitenden Fläche bleiben kann, insbesondere innerhalb der Begrenzung, soweit vorhanden. Entsprechend kann das Steuern derart erfolgen, dass der Grünflächenbearbeitungsroboter auf der zu bearbeitenden Fläche bleiben kann, insbesondere innerhalb der Begrenzung, soweit vorhanden.

Vorteilhafterweise kann der Schritt d) zeitlich nach dem Schritt b) und/oder dem Schritt c), soweit vorhanden, ausgeführt werden.

Außerdem bezieht sich die Erfindung auf ein System, insbesondere zum Ausführen des zuvor beschriebenen Verfahrens. Das erfindungsgemäße System weist ein Eingabegerät und eine Recheneinheit auf. Das Eingabegerät ist zum Vorgeben der spezifischen Form und der spezifischen Größe der zu bearbeitenden Fläche ausgebildet. Die Recheneinheit ist zum Zusammenwirken mit dem Eingabegerät und zum Bestimmen des spezifischen Steuerparameterbereichs des autonomen mobilen Grünflächenbearbeitungsroboters in Abhängigkeit von der vorgegebenen spezifischen Form und der vorgegebenen spezifischen Größe der zu bearbeitenden Fläche ausgebildet.

Das System ermöglicht, den spezifischen Steuerparameterbereich für die zu bearbeitende Fläche mit der spezifischen Form und der spezifischen Größe zu bestimmen. Das Eingabegerät kann eine Tastatur, eine Maus und/oder einen Touchscreen aufweisen. Vorteilhafterweise können/kann das Eingabegerät und/oder die Recheneinheit zur Herstellung einer Datenverbindung mit einem, insbesondere internetbasierten, Kartendienst ausgebildet sein. Insbesondere kann das System einen Computer, ein Smartphone und/oder ein Tablet aufweisen, wobei der Computer, das Smartphone und/oder das Tablet das Eingabegerät und/oder die Recheneinheit umfassen können/kann. Zusätzlich kann das System ein Ausgabegerät aufweisen, wobei das Ausgabegerät dazu ausgebildet sein kann, mit der Recheneinheit zusammen zu wirken und den bestimmten spezifischen Steuerparameterbereich auszugeben. Das Ausgabegerät kann einen Bildschirm und/oder einen Lautsprecher aufweisen.

In einer Weiterbildung der Erfindung weist das System den autonomen mobilen Grünflächenbearbeitungsroboter auf. Der Grünflächenbearbeitungsroboter ist dazu ausgebildet, seine Bewegung auf der zu bearbeitenden Fläche mit der spezifischen Form und der spezifischen Größe in Abhängigkeit von dem spezifischen Steuerparameterbereich zu steuern.

Das System ermöglicht die verbesserte, insbesondere effizientere und/oder effektivere, autonome Bearbeitung der zu bearbeitenden Fläche mittels des autonomen mobilen Grünflächenbearbeitungsroboters.

Vorteilhafterweise kann der Grünflächenbearbeitungsroboter ein Bearbeitungswerkzeug zum Bearbeiten der zu bearbeitenden Fläche aufweisen. Der Grünflächenbearbeitungsroboter kann das Eingabegerät, die Recheneinheit und/oder das Ausgabegerät, soweit vorhanden, umfassen.

In einer Ausgestaltung der Erfindung weist das System eine Recheneinheit-Schnittstelle auf. Der autonome mobile Grünflächenbearbeitungsroboter weist eine Roboter-Schnittstelle auf. Die Recheneinheit-Schnittstelle und die Roboter-Schnittstelle sind zum Übertragen des bestimmten spezifischen Steuerparameterbereichs von der Recheneinheit in den Grünflächenbearbeitungsroboter ausgebildet. Vorteilhafterweise kann die Recheneinheit getrennt und/oder separat von dem Grünflächenbearbeitungsroboter ausgebildet sein. Die Recheneinheit-Schnittstelle kann dem Ausgabegerät, soweit vorhanden, entsprechen. Die Roboter-Schnittstelle kann eine Tastatur, eine Maus und/oder einen Touchscreen aufweisen. Insbesondere können die Recheneinheit-Schnittstelle und die Roboter-Schnittstelle zum automatischen und/oder drahtlosen Übertragen ausgebildet sein. Das Übertragen kann durch den Hersteller, den Fachhändler und/oder den Benutzer veranlasst und/oder ausgelöst werden. In einer Ausgestaltung der Erfindung ist die Recheneinheit zum Bestimmen des spezifischen Wegfahrwinkelbereichs und/oder des spezifischen Drehwinkelbereichs des autonomen mobilen Grünflächenbearbeitungsroboters in Abhängigkeit von der vorgegebenen spezifischen Form und der vorgegebenen spezifischen Größe der zu bearbeitenden Fläche ausgebildet. Der Grünflächenbearbeitungsroboter weist ein Winkelbestimmungsgerät auf. Das Winkelbestimmungsgerät ist dazu ausgebildet, einen Winkel zwischen einer Richtung der Bewegung des Grünflächenbearbeitungsroboters auf der zu bearbeitenden Fläche und der Begrenzung der Fläche zu bestimmen und/oder zu erkennen, so dass der Grünflächenbearbeitungsroboter seine Bewegung auf der Fläche von der Begrenzung weg unter dem Winkel aus dem spezifischen Wegfahrwinkelbereich steuern kann. Zusätzlich oder alternativ weist der Grünflächenbearbeitungsroboter ein Drehwinkelbestimmungsgerät auf. Das Drehwinkelbestimmungsgerät ist dazu ausgebildet, einen Drehwinkel einer Drehung der Bewegungsrichtung des Grünflächenbearbeitungsroboters auf der zu bearbeitenden Fläche an der Begrenzung der Fläche zu bestimmen, so dass der Grünflächenbearbeitungsroboter seine Drehung seiner Bewegungsrichtung auf der Fläche an der Begrenzung um einen Drehwinkel aus dem spezifischen Drehwinkelbereich steuern kann.

In einer Ausgestaltung der Erfindung weist das Winkelbestimmungsgerät eine Magnetfeldsensorenanordnung auf. Die Magnetfeldsensorenanordnung ist zum Erkennen eines Magnetfelds eines Begrenzungsdrahts der zu bearbeitenden Fläche ausgebildet. Der autonome mobile Grünflächenbearbeitungsroboter ist dazu ausgebildet, den Winkel mittels der Magnetfeldsensorenanordnung zu bestimmen. Insbesondere kann der Begrenzungsdraht die zu bearbeitende Fläche umgeben und/oder die Begrenzung definieren, wobei ein elektrischer Strom durch den Begrenzungsdraht fließen kann, wobei der elektrische Strom ein abstandsabhängiges Magnetfeld in der Fläche erzeugen kann. Die Magnetfeldsensorenanordnung ist zum Erkennen des Magnetfelds ausgebildet und kann somit zum Erkennen des Begrenzungsdrahtes ausgebildet sein, insbesondere innerhalb eines Maximalabstands von dem Begrenzungsdraht.

In einer Ausgestaltung der Erfindung weist das Drehwinkelbestimmungsgerät ein Odometriegerät und/oder ein Trägheitsgerät auf. Der autonome mobile Grünflächenbearbeitungsroboter ist dazu ausgebildet, den Drehwinkel mittels des Odometriegeräts und/oder des Trägheitsgeräts zu bestimmen. Insbesondere kann der Grünflächenbearbeitungsroboter Laufräder aufweisen, die angetrieben sein können, und das Odometriegerät kann zum Zusammenwirken mit den Laufrädern und/oder einer Steuereinheit der Laufräder ausgebildet sein. Das Trägheitsgerät kann mindestens einen Beschleunigungs- und/oder Drehratensensor aufweisen. Zusätzlich oder alternativ kann das Drehwinkelbestimmungsgerät eine Magnetfeldsensorenanordnung aufweisen, wie zuvor beschrieben. Der autonome mobile Grünflächenbearbeitungsroboter kann dazu ausgebildet sein, den Drehwinkel mittels der Magnetfeldsensorenanordnung zu bestimmen.

In einer Ausgestaltung der Erfindung ist der autonome mobile Grünflächenbearbeitungsroboter als ein Rasenmähroboter mit einem Rasenmähwerkzeug ausgebildet. Insbesondere kann der Grünflächenbearbeitungsroboter als ein Mulchmähroboter ausgebildet sein. Vorteilhafterweise kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen. Dies kann ein Schneiden von Gras, krautigen Pflanzen, holzigem Gestrüpp oder kleineren Gehölzen mittels des Rasenmähwerkzeugs ermöglichen. Vorteilhafterweise kann das Rasenmähwerkzeug als ein rotierendes Rasenmähwerkzeug und dazu ausgebildet sein, das zu mähende Gut im sogenannten Freischnittverfahren ohne Gegenschneide zu schneiden, insbesondere durch Zentrifugalkraft des Rasenmähwerkzeugs einen Schneidvorgang zu erzeugen. Das Rasenmähwerkzeug kann die Bearbeitungsbreite und/oder eine Mähbreite definieren.

Weiter bezieht sich die Erfindung auf den autonomen mobilen Grünflächenbearbeitungsroboter. Der erfindungsgemäße autonome mobile Grünflächenbearbeitungsroboter weist die Roboter-Schnittstelle und das Winkelbestimmungsgerät und/oder das Drehwinkelbestimmungsgerät auf. Die Roboter-Schnittstelle ist zum Übertragen des, insbesondere bestimmten, spezifischen Wegfahrwinkelbereichs und/oder des, insbesondere bestimmten, spezifischen Drehwinkelbereichs in den Grünflächenbearbeitungsroboter ausgebildet. Das Winkelbestimmungsgerät ist dazu ausgebildet, den Winkel zwischen der Richtung der Bewegung des Grünflächenbearbeitungsroboters auf der zu bearbeitenden Fläche mit der spezifischen Form und der spezifischen Größe und der Begrenzung der Fläche zu bestimmen. Der Grünflächenbearbeitungsroboter ist dazu ausgebildet, seine Bewegung auf der Fläche von der Begrenzung weg unter dem Winkel aus dem spezifischen Wegfahrwinkelbereich zu steuern. Das Drehwinkelbestimmungsgerät ist dazu ausgebildet, den Drehwinkel der Drehung der Bewegungsrichtung des Grünflächenbearbeitungsroboters auf der zu bearbeitenden Fläche an der Begrenzung der Fläche zu bestimmen. Zusätzlich oder alternativ ist der Grünflächenbearbeitungsroboter dazu ausgebildet, seine Drehung seiner Bewegungsrichtung auf der Fläche an der Begrenzung um den Drehwinkel aus dem spezifischen Drehwinkelbereich zu steuern.

Der autonome mobile Grünflächenbearbeitungsroboter ermöglicht die verbesserte, insbesondere effizientere und/oder effektivere, autonome Bearbeitung der zu bearbeitenden Fläche.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: ein Ablaufdiagramm eines erfindungsgemäßen Verfahrens,
- Fig. 2: eine Vorderansicht eines erfindungsgemäßen Systems,
- Fig. 3: eine Seitenansicht eines erfindungsgemäßen autonomen mobilen Grünflächenbearbeitungsroboters,
- Fig. 4: eine Unteransicht des Grünflächenbearbeitungsroboters der Fig. 3,
- Fig. 5: eine Draufsicht auf eine mittels des Grünflächenbearbeitungsroboters der Fig. 3 zu bearbeitende Fläche mit einer spezifischen Form und einer spezifischen Größe,
- Fig. 6: eine weitere Draufsicht auf die zu bearbeitende Fläche der Fig. 5 und
- Fig. 7: eine Draufsicht auf eine andere zu bearbeitende Fläche mit einer anderen spezifischen Form und einer anderen spezifischen Größe.

### DETAILLIERTE BESCHREIBUNG DER AUSFÜHRUNGSBEISPIELE

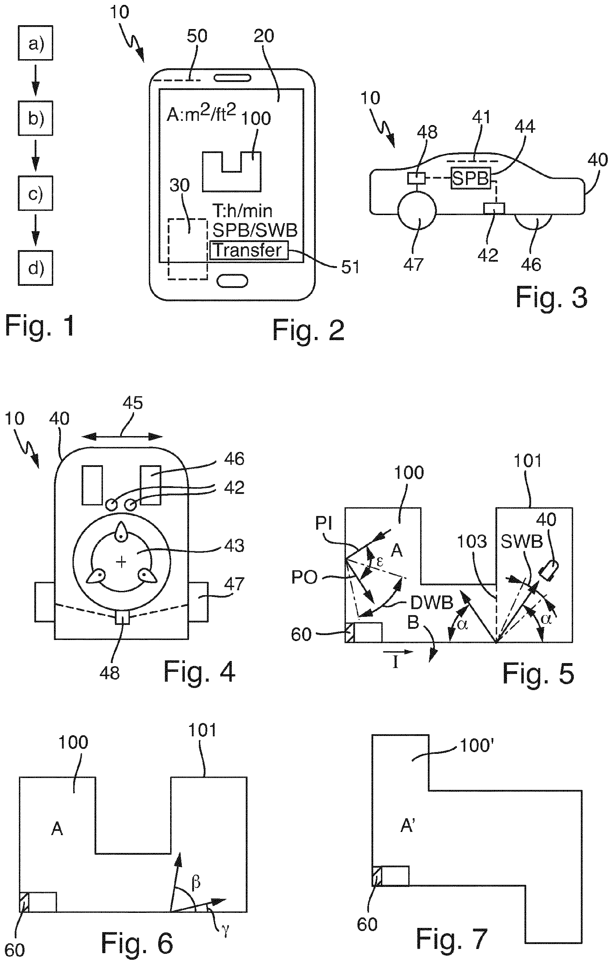

Fig. 2 bis 4 zeigen ein erfindungsgemäßes System 10. Das System 10 weist ein Eingabegerät 20 in Form eines Touchscreens und eine Recheneinheit 30 in Form eines Mikrochips auf. Das Eingabegerät 20 ist zum Vorgeben einer spezifischen Form und einer spezifischen Größe A, A' einer zu bearbeitenden Fläche 100, 100' ausgebildet. Fig. 5 und 6 zeigen eine Fläche 100 in Form einer Wiese mit Rasen mit einer spezifischen U-Form und einer spezifischen Größe A. Fig. 7 zeigt eine andere Fläche 100' mit einer anderen spezifischen S-Form und einer anderen spezifischen Größe A'. Die Recheneinheit 30 ist zum Zusammenwirken mit dem Eingabegerät 20 und zum Bestimmen eines spezifischen Steuerparameterbereichs SPB eines in Fig. 3 und 4 gezeigten autonomen mobilen Grünflächenbearbeitungsroboters 40 in Abhängigkeit von der vorgegebenen spezifischen Form und der vorgegebenen spezifischen Größe A der Fläche 100 ausgebildet.

Somit ermöglicht das System 10 den spezifischen Steuerparameterbereich SPB für die Fläche 100 mit der spezifischen Form und der spezifischen Größe A zu bestimmen.

Im gezeigten Ausführungsbeispiel weist das System 10 ein Smartphone auf, wobei das Smartphone das Eingabegerät 20 und die Recheneinheit 30 umfasst, wie in Fig. 2 zu erkennen. Das Smartphone ist zur Herstellung einer Datenverbindung mit einem internetbasierten Kartendienst ausgebildet. Das Eingabegerät 20 ist zum Vorgeben einer Benutzeradresse ausgebildet. Das Smartphone ist zum automatischen Bestimmen der spezifischen Form und der spezifischen Größe A der Fläche 100 in Abhängigkeit von der Benutzeradresse mittels des Kartendiensts ausgebildet. Zusätzlich weist das System 10 ein Ausgabegerät in Form des Touchscreens auf. Das Ausgabegerät ist dazu ausgebildet, mit der Recheneinheit 30 zusammenzuwirken und den bestimmten spezifischen Steuerparameterbereich SPB auszugeben beziehungsweise anzuzeigen. Des Weiteren ist das Ausgabegerät dazu ausgebildet, die in Abhängigkeit von der Benutzeradresse bestimmte spezifische Form und die spezifische Größe A der Fläche 100 auszugeben, wie in Fig. 2 zu erkennen.

Der in Fig. 3 und 4 gezeigte erfindungsgemäße autonome mobile Grünflächenbearbeitungsroboter 40 ist Teil des Systems 10. Der Grünflächenbearbeitungsroboter 40 ist dazu ausgebildet, seine Bewegung, insbesondere seine Bewegungsrichtung, auf der Fläche 100 mit der spezifischen Form und der spezifischen Größe A in Abhängigkeit von dem spezifischen Steuerparameterbereich SPB automatisch zu steuern. Im Detail weist der Grünflächenbearbeitungsroboter 40 eine Steuereinheit 44 auf. In der Steuereinheit 44 ist der spezifische Steuerparameterbereich SPB hinterlegt. Die Steuereinheit 44 ist dazu ausgebildet, die Bewegung des Grünflächenbearbeitungsroboters 40 auf der Fläche 100 in Abhängigkeit von dem spezifischen Parameterbereich SPB zu steuern, insbesondere derart, dass der Grünflächenbearbeitungsroboter 40 innerhalb einer Begrenzung 101 der Fläche 100 bleibt.

Somit ermöglicht das System 10 beziehungsweise der autonome mobile Grünflächenbearbeitungsroboter 40 eine verbesserte, insbesondere effizientere und/oder effektivere, autonome Bearbeitung der Fläche 100, insbesondere eine an die Fläche 100 angepasste spezifische Bearbeitung.

Fig. 1 zeigt ein erfindungsgemäßes Verfahren zum Bestimmen des spezifischen Steuerparameterbereichs SPB des autonomen mobilen Grünflächenbearbeitungsroboters 40 für die zu bearbeitende Fläche 100 mit der spezifischen Form und der spezifischen Größe A, insbesondere mittels des zuvor beschriebenen Systems 10. Das Verfahren weist die Schritte auf: a) Vorgeben der spezifischen Form und der spezifischen Größe A der Fläche 100. b) Bestimmen, insbesondere automatisches Bestimmen, des spezifischen Steuerparameterbereichs SPB in Abhängigkeit von der vorgegebenen spezifischen Form und der vorgegebenen spezifischen Größe A der Fläche 100. Im gezeigten Ausführungsbeispiel erfolgt das Vorgeben des Schritts a) vollständig automatisch. Im Schritt a) wird in Abhängigkeit von der vorgegebenen Benutzeradresse automatisch die spezifische Form und die spezifische Größe A der Fläche 100 mittels des internetbasierten Kartendiensts bestimmt und für den Schritt b) vorgegeben.

Somit ermöglicht das Verfahren den spezifischen Steuerparameterbereich SPB für die Fläche 100 mit der spezifischen Form und der spezifischen Größe A zu bestimmen.

Im Detail ist der autonome mobile Grünflächenbearbeitungsroboter 40 als ein Rasenmähroboter mit einem Rasenmähwerkzeug 43 ausgebildet, insbesondere als ein Mulchmähroboter. Das Rasenmähwerkzeug 43 umfasst ein Metallschneideblatt mit drei Schneidezähnen. In alternativen Ausführungsbeispielen kann das Rasenmähwerkzeug nur einen einzigen Schneidezahn, zwei oder mehr als drei Schneidezähne umfassen. Das Rasenmähwerkzeug 43 ist als ein rotierendes Rasenmähwerkzeug und dazu ausgebildet, die Fläche 100 im Freischnittverfahren zu mähen, insbesondere durch Zentrifugalkraft des Rasenmähwerkzeugs 43 einen Schneidvorgang zu erzeugen. Das Rasenmähwerkzeug 43 definiert eine Bearbeitungsbreite 45 des Grünflächenbearbeitungsroboters 40, wie in Fig. 4 zu erkennen.

Des Weiteren weist der Grünflächenbearbeitungsroboter 40 vordere Laufräder 46, die schwenkbar sind, und hintere Laufräder 47 auf, die getrennt voneinander angetrieben sind. Somit kann sich der Grünflächenbearbeitungsroboter 40 auf der Fläche 100 selbständig bewegen, insbesondere mit einer konstanten Bewegungsgeschwindigkeit, und lenken. Außerdem weist der Grünflächenbearbeitungsroboter 40 einen nicht dargestellten Elektromotor zum Antrieb des Rasenmähwerkzeugs 43 auf. In alternativen Ausführungsbeispielen kann der Grünflächenbearbeitungsroboter 40 einen Verbrennungsmotor, insbesondere einen Benzinmotor, zum Antrieb des Rasenmähwerkzeugs 43 aufweisen. Weiter weist der Grünflächenbearbeitungsroboter 40 einen nicht dargestellten Akkumulator zur Antriebsenergieversorgung der hinteren Laufräder 47 und des Elektromotors zum Antrieb des Rasenmähwerkzeugs 43 auf. In alternativen Ausführungsbeispielen kann der Grünflächenbearbeitungsroboter eine Brennstoffzelle, einen Kraftstofftank oder eine andere Art einer Antriebsenergiequelle zu Antriebsenergieversorgung aufweisen.

Zudem weist das System 10 eine Basisstation 60 für den Grünflächenbearbeitungsroboter 40 auf, die hier an der Begrenzung 101 angeordnet ist, wie in Fig. 5 und 6 jeweils links unten zu erkennen. Im gezeigten Ausführungsbeispiel ist die Basisstation 60 als eine Ladestation zum Wiederaufladen, insbesondere zum automatischen, des Akkumulators des Grünflächenbearbeitungsroboters 40 ausgebildet.

Im gezeigten Ausführungsbeispiel weist der spezifische Steuerparameterbereich SPB einen spezifischen Wegfahrwinkelbereich SWB auf, wie in Fig. 5 zu erkennen. Die Fläche 100 ist von der Begrenzung 101 umgeben. Der Grünflächenbearbeitungsroboter 40 weist ein Winkelbestimmungsgerät 42 auf. Das Winkelbestimmungsgerät 42 ist dazu ausgebildet, einen Winkel zwischen der Richtung der Bewegung des Grünflächenbearbeitungsroboters 40 auf der Fläche 100 und der Begrenzung 101 zu bestimmen. Die Steuereinheit 44 ist dazu ausgebildet, mit dem Winkelbestimmungsgerät 42 zusammenzuwirken, wie in Fig. 3 durch die gestrichelte Linie angedeutet, und die Bewegung des Grünflächenbearbeitungsroboters 40 von der Begrenzung 101 weg unter einem Winkel α aus dem spezifischen Wegfahrwinkelbereich SWB zu steuern. Die Recheneinheit 30 ist zum Bestimmen des spezifischen Wegfahrwinkelbereichs SWB des Grünflächenbearbeitungsroboters 40 in Abhängigkeit von der vorgegebenen spezifischen Form und der vorgegebenen spezifischen Größe A der Fläche 100 ausgebildet.

Im Detail weist das System 10 einen Begrenzungsdraht und eine nicht dargestellte Stromquelle auf. Der Begrenzungsdraht umgibt die Fläche 100 und definiert die Begrenzung 101. Die Stromquelle ist dazu ausgebildet, einen elektrischen Strom I durch den Begrenzungsdraht fließen zu lassen, wobei der elektrische Strom I ein abstandsabhängiges Magnetfeld B in der Fläche 100 erzeugt, wie in Fig. 5 zu erkennen.

Das Winkelbestimmungsgerät 42 weist eine Magnetfeldsensorenanordnung in Form von zwei räumlich getrennten Magnetfeldsensoren auf. Die Magnetfeldsensorenanordnung ist zum Erkennen des Magnetfelds B des Begrenzungsdrahts und somit zum Erkennen des Begrenzungsdrahts ausgebildet, insbesondere innerhalb eines Maximalabstands beispielsweise von 1 Meter von dem Begrenzungsdraht beziehungsweise der Begrenzung 101 entfernt. Der Grünflächenbearbeitungsroboter 40 beziehungsweise sein Winkelbestimmungsgerät 42 ist dazu ausgebildet, den Winkel α mittels der Magnetfeldsensorenanordnung zu bestimmen.

Entsprechend weist der Schritt b) des Verfahrens auf: Bestimmen des spezifischen Wegfahrwinkelbereichs SWB in Abhängigkeit von der vorgegebenen spezifischen Form und der vorgegebenen spezifischen Größe A der Fläche 100.

Im gezeigten Ausführungsbeispiel weist der Schritt b) auf: Auswählen des spezifischen Steuerparameterbereichs SPB beziehungsweise seines spezifischen Wegfahrwinkelbereichs SWB aus einem zulässigen Steuerparameterbereich beziehungsweise einem zulässigen Wegfahrwinkelbereich. Der zulässige Wegfahrwinkelbereich umfasst einen Bereich von 0 bis 180 Grad. Der spezifische Wegfahrwinkelbereich SWB weist eine Winkelbreite von 20 Grad inklusive Spiegelung auf. Im Detail umfasst der spezifische Wegfahrwinkelbereich SWB eine zusammenhängende Winkelbreite 50 Grad plus/minus 5 Grad auf einer Seite einer zur Begrenzung 101 Senkrechten 103 und entsprechend eine zusammenhängende Winkelbreite 130 Grad plus/minus 5 Grad gespiegelt auf einer anderen Seite der Senkrechten 103. Somit ist der spezifische Wegfahrwinkelbereich SWB relativ kleiner als der zulässige relativ größere Wegfahrwinkelbereich. Der Winkel α wird mittels eines Zufallsalgorithmus aus dem spezifischen Wegfahrwinkelbereich SWB ausgewählt.

Der spezifische Steuerparameterbereich SPB beziehungsweise sein spezifischer Wegfahrwinkelbereich SWB wird wie folgt bestimmt: Der Schritt b) weist auf: Simulieren einer Abfolge von gesteuerten Bewegungen des Grünflächenbearbeitungsroboters 40 auf der Fläche 100 mit der spezifischen Form und der spezifischen Größe A jeweils in Abhängigkeit von verschiedenen Steuerparameterbereichen. Im gezeigten Ausführungsbeispiel werden unter anderem die verschiedenen Wegfahrwinkelbereiche 50 Grad plus/minus 5 Grad inklusive Spiegelung, wie in Fig. 5 zu erkennen, sowie β gleich 80 Grad plus/minus 5 Grad inklusive Spiegelung und γ gleich 10 Grad plus/minus 5 Grad inklusive Spiegelung simuliert, wie in Fig. 6 zu erkennen. Des Weiteren weist der Schritt b) auf: Bestimmen einer Zeitdauer T, in welcher ein Großteil der Fläche 100 von dem Grünflächenbearbeitungsroboter 40 abgedeckt worden ist, jeweils für die verschiedenen Steuerparameterbereiche. Außerdem weist der Schritt b) auf: Auswählen eines der verschiedenen Steuerparameterbereiche, für welche die Zeitdauer T am kürzesten ist, als den spezifische Steuerparameterbereich SPB. Vorliegend ist die Zeitdauer T für den spezifischen Steuerparameterbereich SPB beziehungsweise seinen spezifischen Wegfahrwinkelbereich SWB von 50 Grad plus/minus 5 Grad am kürzesten. Das Simulieren, das Bestimmen und das Auswählen werden mittels der Recheneinheit 30 ausgeführt. Anschließend werden der spezifische Steuerparameterbereich SPB beziehungsweise sein spezifischer Wegfahrwinkelbereich SWB und die Zeitdauer T mittels des Ausgabegeräts ausgegeben, wie in Fig. 2 zu erkennen.

Zusätzlich zum spezifischen Wegfahrwinkelbereich SWB weist im gezeigten Ausführungsbeispiel der spezifische Steuerparameterbereich SPB einen spezifischen Drehwinkelbereich DWB auf, wie in Fig. 5 zu erkennen. In alternativen Ausführungsbeispielen kann es ausreichen, wenn der spezifische Steuerparameterbereich entweder den spezifischen Wegfahrwinkelbereich oder den spezifischen Drehwinkelbereich aufweist.

Der Grünflächenbearbeitungsroboter 40 weist ein Drehwinkelbestimmungsgerät 48 auf. In alternativen Ausführungsbeispielen kann es ausreichen, wenn der Grünflächenbearbeitungsroboter entweder das Winkelbestimmungsgerät oder das Drehwinkelbestimmungsgerät aufweist. Das Drehwinkelbestimmungsgerät 48 ist dazu ausgebildet, einen Drehwinkel einer Drehung der Bewegungsrichtung des Grünflächenbearbeitungsroboters 40 auf der Fläche 100 an der Begrenzung 101 zu bestimmen. Die Steuereinheit 44 ist dazu ausgebildet, mit dem Drehwinkelbestimmungsgerät 48 zusammenzuwirken, wie in Fig. 3 durch die gestrichelte Linie angedeutet, und die Drehung der Bewegungsrichtung des Grünflächenbearbeitungsroboters 40 an der Begrenzung 101 um einen Drehwinkel ε aus dem spezifischen Drehwinkelbereich DWB zu steuern.

Die Recheneinheit 30 ist zum Bestimmen des spezifischen Drehwinkelbereichs DWB des Grünflächenbearbeitungsroboters 40 in Abhängigkeit von der vorgegebenen spezifischen Form und der vorgegebenen spezifischen Größe A der Fläche 100 ausgebildet. In alternativen Ausführungsbeispielen kann es ausreichen, wenn die Recheneinheit zum Bestimmen des spezifischen Wegfahrwinkelbereichs oder spezifischen Drehwinkelbereichs ausgebildet ist.

Das Drehwinkelbestimmungsgerät 48 weist ein Odometriegerät auf. Der Grünflächenbearbeitungsroboter 40 beziehungsweise sein Drehwinkelbestimmungsgerät 48 ist dazu ausgebildet, den Drehwinkel ε mittels des Odometriegeräts zu bestimmen. Im Detail ist das Drehwinkelbestimmungsgerät 48 beziehungsweise sein Odometriegerät dazu ausgebildet, mit den Laufrädern 46, 47, insbesondere mit den hinteren Laufrädern 47, zusammenzuwirken, wie in Fig. 3 und 4 durch gestrichelte Linien angedeutet. In alternativen Ausführungsbeispielen kann das Drehwinkelbestimmungsgerät zusätzlich oder alternativ ein Trägheitsgerät und/oder eine Magnetfeldsensorenanordnung aufweisen.

Entsprechend weist der Schritt b) des Verfahrens auf: Bestimmen des spezifischen Drehwinkelbereichs DWB in Abhängigkeit von der vorgegebenen spezifischen Form und der vorgegebenen spezifischen Größe A der Fläche 100. Im Detail kann der spezifische Drehwinkelbereich wie der spezifische Wegfahrwinkelbereich bestimmt werden, wie zuvor beschrieben.

Im gezeigten Ausführungsbeispiel liegt der spezifische Drehwinkelbereich in einem Betragbereich von 30 Grad bis 100 Grad. Der Betragbereich umfasst den Drehwinkel ε. Im Detail beträgt der Drehwinkel zwischen der ursprünglichen Bewegungsrichtung PI und einer gedrehten Bewegungsrichtung PO im gezeigten Ausführungsbeispiel 90 Grad. Zusätzlich umfasst der Betragsbereich den an der der ursprünglichen Bewegungsrichtung PI gespiegelten, nicht dargestellten Drehwinkel. Der Drehwinkel ε beziehungsweise sein gespiegelter Drehwinkel wird mittels eines Zufallsalgorithmus aus dem spezifischen Drehwinkelbereich DWB ausgewählt.

Außerdem weist das System 10 eine Recheneinheit-Schnittstelle 50 in Form einer Antenne auf. Der Grünflächenbearbeitungsroboter 40 weist eine Roboter-Schnittstelle 41 in Form einer Antenne auf. Die Recheneinheit-Schnittstelle 50 und die Roboter-Schnittstelle 41 sind zum Zusammenwirken miteinander und zum automatischen und drahtlosen Übertragen des bestimmten spezifischen Steuerparameterbereichs SPB von der Recheneinheit 30 in den Grünflächenbearbeitungsroboter 40 ausgebildet. Das Übertragen kann durch den Transfer-Button 51 auf dem Ein-/Ausgabegerät 20 in Form des Touchscreens ausgelöst werden. Die Roboter-Schnittstelle 41 und die Steuereinheit 44 sind zum Zusammenwirken miteinander ausgebildet.

Entsprechend weist das Verfahren den Schritt auf c): Übertragen, insbesondere automatisches und drahtloses Übertragen, des bestimmten spezifischen Steuerparameterbereichs SPB in den Grünflächenbearbeitungsroboter 40.

Ein erfindungsgemäßes Verfahren zum Betreiben des Grünflächenbearbeitungsroboters 40 auf der Fläche 100 mit der spezifischen Form und der spezifischen Größe A umfasst das zuvor beschriebene Verfahren zum Bestimmen des spezifischen Steuerparameterbereichs SPB. Des Weiteren weist das Verfahren den Schritt d) auf: Steuern, insbesondere automatisches Steuern, der Bewegung des Grünflächenbearbeitungsroboters 40 auf der Fläche 100 mit der spezifischen Form und der spezifischen Größe A in Abhängigkeit von dem bestimmten spezifischen Steuerparameterbereich SPB beziehungsweise seines bestimmten spezifischen Wegfahrwinkelbereichs SWB und/oder seines bestimmten spezifischen Drehwinkelbereichs DWB. Zusätzlich erfolgt das Steuern derart, dass der Grünflächenbearbeitungsroboter 40 innerhalb der Begrenzung 101 der Fläche 100 bleibt.

Im Detail kann der Grünflächenbearbeitungsroboter 40 mittels des Winkelbestimmungsgeräts 42 in Form der Magnetfeldsensorenanordnung, soweit vorhanden, die Begrenzung 101 in Form des Begrenzungsdrahts, soweit vorhanden, erkennen und somit innerhalb der Begrenzung 101 bleiben.

Zusätzlich oder alternativ kann der Grünflächenbearbeitungsroboter ein Begrenzungserkennungsgerät aufweisen, das zum Erkennen der Begrenzung ausgebildet ist. Beispielsweise kann das Begrenzungserkennungsgerät einen, insbesondere nur einen einzigen, Magnetfeldsensor aufweisen. Dann kann der Grünflächenbearbeitungsroboter mittels des Begrenzungserkennungsgeräts in Form des Magnetfeldsensors die Begrenzung in Form des Begrenzungsdrahts, soweit vorhanden, erkennen und somit innerhalb der Begrenzung bleiben: Der Grünflächenbearbeitungsroboter kann an der Begrenzung mittels des Drehwinkelbestimmungsgerät um den Drehwinkel aus dem spezifischen Drehwinkelbereich drehen. Falls der Drehwinkel nicht ausreicht, um innerhalb der Begrenzung zu bleiben, kann er nochmals um den oder einen anderen Drehwinkel aus dem spezifischen Drehwinkelbereich drehen.

Somit ermöglicht das Verfahren die verbesserte autonome Bearbeitung der Fläche 100 mittels des Grünflächenbearbeitungsroboters 40.

Wie die gezeigten und oben erläuterten Ausführungsbeispiele deutlich machen, stellt die Erfindung ein vorteilhaftes Verfahren zum Bestimmen eines spezifischen Steuerparameterbereichs eines autonomen mobilen Grünflächenbearbeitungsroboters für eine zu bearbeitende Fläche mit einer spezifischen Form und einer spezifischen Größe bereit, das eine verbesserte autonome Bearbeitung der Fläche mittels des Grünflächenbearbeitungsroboters ermöglicht, sowie ein Verfahren zum Betreiben des Grünflächenbearbeitungsroboters auf der Fläche, ein System, insbesondere zum Ausführen des Verfahrens, und den Grünflächenbearbeitungsroboter.

## Patentansprüche

1. Verfahren zum Bestimmen eines spezifischen Steuerparameterbereichs (SPB) eines autonomen mobilen Grünflächenbearbeitungsroboters (40) für eine zu bearbeitende Fläche (100) mit einer spezifischen Form und einer spezifischen Größe (A),
- wobei der autonome mobile Grünflächenbearbeitungsroboter (40) dazu ausgebildet ist, seine Bewegung auf der zu bearbeitenden Fläche (100) in Abhängigkeit von dem spezifischen Steuerparameterbereich (SPB) zu steuern,
wobei das Verfahren die Schritte aufweist,
- a) Vorgeben der spezifischen Form und der spezifischen Größe (A) der zu bearbeitenden Fläche (100) und
- b) Bestimmen des spezifischen Steuerparameterbereichs (SPB) in Abhängigkeit von der vorgegebenen spezifischen Form und der vorgegebenen spezifischen Größe der zu bearbeitenden Fläche.

2. Verfahren nach Anspruch 1,
- wobei der Schritt b) aufweist:
Auswählen des spezifischen Steuerparameterbereichs (SPB) aus einem zulässigen Steuerparameterbereich.

3. Verfahren nach Anspruch 1 oder 2,
- wobei der spezifische Steuerparameterbereich (SPB) einen spezifischen Wegfahrwinkelbereich (SWB) und/oder einen spezifischen Drehwinkelbereich (DWB) aufweist,
- wobei die zu bearbeitende Fläche (100) mit der spezifischen Form und der spezifischen Größe (A) von einer Begrenzung (101) umgeben ist und
- wobei der autonome mobile Grünflächenbearbeitungsroboter (40) dazu ausgebildet ist, seine Bewegung von der Begrenzung weg unter einem Winkel (α) aus dem spezifischen Wegfahrwinkelbereich und/oder eine Drehung seiner Bewegungsrichtung an der Begrenzung um einen Drehwinkel (ε) aus dem spezifischen Drehwinkelbereich zu steuern,
- wobei der Schritt b) aufweist:
Bestimmen des spezifischen Wegfahrwinkelbereichs (SWB) und/oder des spezifischen Drehwinkelbereichs (DWB) in Abhängigkeit von der vorgegebenen spezifischen Form und der vorgegebenen spezifischen Größe (A) der zu bearbeitenden Fläche (100).

4. Verfahren nach Anspruch 3,
- wobei der spezifische Wegfahrwinkelbereich (SWB) eine Winkelbreite von maximal 120 Grad aufweist und/oder
- wobei der spezifische Drehwinkelbereich (DWB) in einem Betragbereich von 10 Grad bis 120 Grad liegt.

5. Verfahren nach einem der vorhergehenden Ansprüche,
wobei der Schritt b) aufweist:
- Simulieren einer Abfolge von gesteuerten Bewegungen des autonomen mobilen Grünflächenbearbeitungsroboters (40) auf der zu bearbeitenden Fläche (100) mit der spezifischen Form und der spezifischen Größe (A) jeweils in Abhängigkeit von verschiedenen Steuerparameterbereichen,
- Bestimmen einer Zeitdauer (T), in welcher ein Großteil der zu bearbeitenden Fläche von dem Grünflächenbearbeitungsroboter abgedeckt worden ist, jeweils für die verschiedenen Steuerparameterbereiche und
- Auswählen eines der verschiedenen Steuerparameterbereiche, für welchen die Zeitdauer am kürzesten ist, als den spezifischen Steuerparameterbereich (SPB).

6. Verfahren nach einem der vorhergehenden Ansprüche,
- wobei das Verfahren den Schritt aufweist:
c) Übertragen des bestimmten spezifischen Steuerparameterbereichs (SPB) in den autonomen mobilen Grünflächenbearbeitungsroboter (40).

7. Verfahren zum Betreiben eines autonomen mobilen Grünflächenbearbeitungsroboters (40) auf einer zu bearbeitenden Fläche (100) mit einer spezifischen Form und einer spezifischen Größe (A), wobei das Verfahren die Schritte aufweist:
- Bestimmen eines spezifischen Steuerparameterbereichs (SPB) des autonomen mobilen Grünflächenbearbeitungsroboters (40) nach dem Verfahren nach einem der vorhergehenden Ansprüche und
- d) Steuern der Bewegung des Grünflächenbearbeitungsroboters auf der zu bearbeitenden Fläche (100) mit der spezifischen Form und der spezifischen Größe (A) in Abhängigkeit von dem bestimmten spezifischen Steuerparameterbereich.

8. System (10) zum Ausführen des Verfahrens nach einem der vorhergehenden Ansprüche, wobei das System (10) aufweist:
- ein Eingabegerät (20) und
- eine Recheneinheit (30),
- wobei das Eingabegerät zum Vorgeben einer spezifischen Form und einer spezifischen Größe (A) einer zu bearbeitenden Fläche (100) ausgebildet ist und
- wobei die Recheneinheit zum Zusammenwirken mit dem Eingabegerät und zum Bestimmen eines spezifischen Steuerparameterbereichs (SPB) eines autonomen mobilen Grünflächenbearbeitungsroboters (40) in Abhängigkeit von der vorgegebenen spezifischen Form und der vorgegebenen spezifischen Größe der zu bearbeitenden Fläche ausgebildet ist.

9. System (10) nach Anspruch 8, wobei das System (10) aufweist:
- einen autonomen mobilen Grünflächenbearbeitungsroboter (40), wobei der Grünflächenbearbeitungsroboter dazu ausgebildet ist, seine Bewegung auf der zu bearbeitenden Fläche (100) mit der spezifischen Form und der spezifischen Größe (A) in Abhängigkeit von dem spezifischen Steuerparameterbereich (SPB) zu steuern.

10. System (10) nach Anspruch 9,
- wobei das System (10) eine Recheneinheit-Schnittstelle (50) aufweist und
- wobei der autonome mobile Grünflächenbearbeitungsroboter (40) eine Roboter-Schnittstelle (41) aufweist,
- wobei die Recheneinheit-Schnittstelle und die Roboter-Schnittstelle zum Übertragen des bestimmten spezifischen Steuerparameterbereichs (SPB) von der Recheneinheit (30) in den Grünflächenbearbeitungsroboter ausgebildet sind.

11. System (10) nach Anspruch 9 oder 10,
- wobei die Recheneinheit (30) zum Bestimmen eines spezifischen Wegfahrwinkelbereichs (SWB) und/oder eines spezifischen Drehwinkelbereichs (DWB) des autonomen mobilen Grünflächenbearbeitungsroboters (40) in Abhängigkeit von der vorgegebenen spezifischen Form und der vorgegebenen spezifischen Größe (A) der zu bearbeitenden Fläche (100) ausgebildet ist und
- wobei der Grünflächenbearbeitungsroboter ein Winkelbestimmungsgerät (42) aufweist, wobei das Winkelbestimmungsgerät dazu ausgebildet ist, einen Winkel zwischen einer Richtung der Bewegung des Grünflächenbearbeitungsroboters auf der zu bearbeitenden Fläche und einer Begrenzung (101) der Fläche zu bestimmen, so dass der Grünflächenbearbeitungsroboter seine Bewegung auf der Fläche von der Begrenzung weg unter einem Winkel (α) aus dem spezifischen Wegfahrwinkelbereich steuern kann, und/oder
- wobei der Grünflächenbearbeitungsroboter ein Drehwinkelbestimmungsgerät (48) aufweist, wobei das Drehwinkelbestimmungsgerät dazu ausgebildet ist, einen Drehwinkel einer Drehung der Bewegungsrichtung des Grünflächenbearbeitungsroboters auf der zu bearbeitenden Fläche an der Begrenzung der Fläche zu bestimmen, so dass der Grünflächenbearbeitungsroboter seine Drehung seiner Bewegungsrichtung auf der Fläche an der Begrenzung um einen Drehwinkel (ε) aus dem spezifischen Drehwinkelbereich steuern kann.

12. System (10) nach Anspruch 11,
- wobei das Winkelbestimmungsgerät (42) eine Magnetfeldsensorenanordnung aufweist, wobei die Magnetfeldsensorenanordnung zum Erkennen eines Magnetfelds (B) eines Begrenzungsdrahts (101) der zu bearbeitenden Fläche (100) ausgebildet ist, und
- wobei der autonome mobile Grünflächenbearbeitungsroboter (40) dazu ausgebildet ist, den Winkel (α) mittels der Magnetfeldsensorenanordnung zu bestimmen.

13. System (10) nach Anspruch 11 oder 12,
- wobei das Drehwinkelbestimmungsgerät (48) ein Odometriegerät und/oder ein Trägheitsgerät aufweist, und
- wobei der autonome mobile Grünflächenbearbeitungsroboter (40) dazu ausgebildet ist, den Drehwinkel (ε) mittels des Odometriegeräts und/oder des Trägheitsgeräts zu bestimmen.

14. System (10) nach einem der Ansprüche 9 bis 13,
- wobei der autonome mobile Grünflächenbearbeitungsroboter (40) als ein Rasenmähroboter mit einem Rasenmähwerkzeug (43) ausgebildet ist.

15. Autonomer mobiler Grünflächenbearbeitungsroboter (40), wobei der autonome mobile Grünflächenbearbeitungsroboter (40) aufweist:
- *eine Roboter-Schnittstelle (41), wobei die Roboter-Schnittstelle zum Übertragen eines spezifischen Wegfahrwinkelbereichs (SWB) und*/*oder eines spezifischen Drehwinkelbereichs (DWB) **bestimmt nach einem Verfahren nach Anspruch 3 oder einem von Anspruch 3 abhängigen Anspruch** in den Grünflächenbearbeitungsroboter ausgebildet ist, und*
- ein Winkelbestimmungsgerät (42), wobei das Winkelbestimmungsgerät dazu ausgebildet ist, einen Winkel zwischen einer Richtung einer Bewegung des Grünflächenbearbeitungsroboters auf einer zu bearbeitenden Fläche (100) mit einer spezifischen Form und einer spezifischen Größe (A) und einer Begrenzung (101) der Fläche zu bestimmen, wobei der Grünflächenbearbeitungsroboter dazu ausgebildet ist, seine Bewegung auf der Fläche von der Begrenzung weg unter einem Winkel (α) aus dem spezifischen Wegfahrwinkelbereich zu steuern, und/oder
- ein Drehwinkelbestimmungsgerät (48), wobei das Drehwinkelbestimmungsgerät dazu ausgebildet ist, einen Drehwinkel einer Drehung der Bewegungsrichtung des Grünflächenbearbeitungsroboters auf der zu bearbeitenden Fläche an der Begrenzung der Fläche zu bestimmen, wobei der Grünflächenbearbeitungsroboter dazu ausgebildet ist, seine Drehung seiner Bewegungsrichtung auf der Fläche an der Begrenzung um einen Drehwinkel (ε) aus dem spezifischen Drehwinkelbereich zu steuern.

## Claims

1. Method for determining a specific control parameter range (SPB) of an autonomous mobile green area maintenance robot (40) for an area (100) to be treated having a specific shape and a specific size (A),
- wherein the autonomous mobile green area maintenance robot (40) is configured to control its movement on the area (100) to be treated as a function of the specific control parameter range (SPB),
the method comprising the steps
- a) predefining the specific shape and the specific size (A) of the area (100) to be treated and
- b) determining the specific control parameter range (SPB) as a function of the predefined specific shape and the predefined specific size of the area to be treated.

2. Method according to claim 1,
- wherein step b) comprises:
selecting the specific control parameter range (SPB) from an allowed control parameter range.

3. Method according to claim 1 or 2,
- wherein the specific control parameter range (SPB) includes a specific departure angle range (SWB) and/or a specific rotation angle range (DWB),
- wherein the area (100) to be treated having the specific shape and the specific size (A) is enclosed by a boundary (101), and
- wherein the autonomous mobile green area maintenance robot (40) is configured to control its movement away from the boundary at an angle (α) of the specific departure angle range and/or a rotation of its direction of movement on the boundary at a rotation angle (ε) of the specific rotation angle range,
- wherein step b) comprises:
determining the specific departure angle range (SWB) and/or the specific rotation angle range (DWB) as a function of the predefined specific shape and the predefined specific size (A) of the area (100) to be treated.

4. Method according to claim 3,
- wherein the specific departure angle range (SWB) has an angular width of at maximum 120 degrees, and/or
- wherein the specific rotation angle range (DWB) has a value in the range from 10 degrees to 120 degrees.

5. Method according to any of the preceding claims,
wherein step b) comprises:
- simulating a sequence of controlled movements of the autonomous mobile green area maintenance robot (40) on the area (100) to be treated having the specific shape and the specific size (A) respectively as a function of different control parameter ranges,
- determining a period of time (T), in which a large part of the area to be treated has been covered by the green area maintenance robot, respectively for the different control parameter ranges, and
- selecting one of the different control parameter ranges having the shortest period of time as the specific control parameter range (SPB).

6. Method according to any of the preceding claims,
- the method comprising the step:
c) transferring the determined specific control parameter range (SPB) to the autonomous mobile green area maintenance robot (40).

7. Method for operating an autonomous mobile green area maintenance robot (40) on an area (100) to be treated having a specific shape and a specific size (A), the method comprising the steps:
- determining a specific control parameter range (SPB) of the autonomous mobile green area maintenance robot (40) according to the method according to any of the preceding claims, and
- d) controlling the movement of the green area maintenance robot on the area (100) to be treated having the specific shape and the specific size (A), as a function of the determined specific control parameter range.

8. System (10) for carrying out the method according to any of the preceding claims, the system (10) comprising:
- an input device (20) and
- a computing unit (30),
- wherein the input device is configured to predefine a specific shape and a specific size (A) of an area (100) to be treated, and
- wherein the computing unit is configured to cooperate with the input device and to determine a specific control parameter range (SPB) of an autonomous mobile green area maintenance robot (40) as a function of the predefined specific shape and the predefined specific size of the area to be treated.

9. System (10) according to claim 8, the system (10) comprising:
- an autonomous mobile green area maintenance robot (40), wherein the green area maintenance robot is configured to control its movement on the area (100) to be treated having the specific shape and the specific size (A) as a function of the specific control parameter range (SPB).

10. System (10) according to claim 9,
- wherein the system (10) includes a computing unit interface (50), and
- wherein the autonomous mobile green area maintenance robot (40) has a robot interface (41),
- wherein the computing unit interface and the robot interface are configured to transfer the determined specific control parameter range (SPB) from the computing unit (30) to the green area maintenance robot.

11. System (10) according to claim 9 or 10,
- wherein the computing unit (30) is configured to determine a specific departure angle range (SWB) and/or a specific rotation angle range (DWB) of the autonomous mobile green area maintenance robot (40) as a function of the predefined specific shape and the predefined specific size (A) of the area (100) to be treated, and
- wherein the green area maintenance robot has an angle determination device (42), wherein the angle determination device is configured to determine an angle between a direction of movement of the green area maintenance robot on the area to be treated and a boundary (101) of the area such that the green area maintenance robot can control its movement on the area away from the boundary at an angle (α) of the specific departure angle range, and/or
- wherein the green area maintenance robot has a rotation angle determination device (48), wherein the rotation angle determination device is configured to determine a rotation angle of a rotation of the direction of movement of the green area maintenance robot on the area to be treated on the boundary of the area such that the green area maintenance robot can control a rotation of the direction of movement on the area on the boundary at a rotation angle (ε) of the specific rotation angle range.

12. System (10) according to claim 11,
- wherein the angle determination device (42) includes a magnetic field sensor array, wherein the magnetic field sensor array is configured to detect a magnetic field (B) of a boundary wire (101) of the area (100) to be treated, and
- wherein the autonomous mobile green area maintenance robot (40) is configured to determine the angle (α) using the magnetic field sensor array.

13. System (10) according to claim 11 or 12,
- wherein the rotation angle determination device (48) includes an odometry device and/or an inertia device, and
- wherein the autonomous mobile green area maintenance robot (40) is configured to determine the rotation angle (ε) using the odometry device and/or the inertia device.

14. System (10) according to any of claims 9 to 13,
- wherein the autonomous mobile green area maintenance robot (40) is a lawn mower robot including a lawn mower tool (43).

15. Autonomous mobile green area maintenance robot (40), the autonomous mobile green area maintenance robot (40) comprising:
- a *robot interface (41), wherein the robot interface is configured to transfer a specific departure angle range (SWB) and*/*or a specific rotation angle range (DWB)* ***determined according to a method according to claim* 3** ***or a claim dependent from claim 3** to the green area maintenance robot, and*
- an angle determination device (42), wherein the angle determination device is configured to determine an angle between a direction of movement of the green area maintenance robot on an area (100) to be treated having a specific shape and a specific size (A) and a boundary (101) of the area, wherein the green area maintenance robot is configured to control its movement on the area away from the boundary at an angle (α) of the specific departure angle range, and/or
- a rotation angle determination device (48), wherein the rotation angle determination device is configured to determine a rotation angle of a rotation of the direction of movement of the green area maintenance robot on the area to be treated on the boundary of the area, wherein the green area maintenance robot is configured to control a rotation of the direction of movement on the area on the boundary at a rotation angle (ε) of the specific rotation angle range.

## Revendications

1. Procédé pour la détermination d'une plage spécifique de paramètres de commande (SPB) d'un robot de traitement d'espaces verts (40) mobile autonome pour une surface (100) à traiter ayant une forme spécifique et une taille (A) spécifique,
- le robot de traitement d'espaces verts (40) mobile autonome étant configuré pour commander son mouvement sur la surface (100) à traiter en fonction de la plage spécifique de paramètres de commande (SPB),
le procédé comprenant les étapes suivantes :
a) prédéfinition de la forme spécifique et de la taille (A) spécifique de la surface (100) à traiter et
b) détermination de la plage spécifique de paramètres de commande (SPB) en fonction de la forme spécifique prédéfinie et de la taille (A) spécifique prédéfinie de la surface à traiter.

2. Procédé selon la revendication 1, l'étape b) comprenant :
sélection de la plage spécifique de paramètres de commande (SPB) à partir d'une plage admissible de paramètres de commande.

3. Procédé selon la revendication 1 ou 2,
- la plage spécifique de paramètres de commande (SPB) possédant une plage spécifique d'angles d'éloignement (SWB) et/ou une plage spécifique d'angles de rotation (DWB),
- la surface (100) à traiter ayant la forme spécifique et la taille (A) spécifique étant entourée par une délimitation (101) et
- le robot de traitement d'espaces verts (40) mobile autonome étant configuré pour commander son mouvement d'éloignement de la délimitation sous un angle (α) issu de la plage spécifique d'angles d'éloignement et/ou une rotation de sa direction de mouvement au niveau de la délimitation autour d'un angle de rotation (ε) issu de la plage spécifique d'angles de rotation,
- l'étape b) comprenant :
détermination de la plage spécifique d'angles d'éloignement (SWB) et/ou de la plage spécifique d'angles de rotation (DWB) en fonction de la forme spécifique prédéfinie et de la taille (A) spécifique prédéfinie de la surface (100) à traiter.

4. Procédé selon la revendication 3,
- la plage spécifique d'angles d'éloignement (SWB) présentant une largeur angulaire maximale de 120 degrés et/ou
- la plage spécifique d'angles de rotation (DWB) étant comprise dans une plage de valeurs de 10 degrés à 120 degrés.

5. Procédé selon l'une quelconque des revendications précédentes, l'étape b) comprenant :
- simulation d'une séquence de mouvements commandés du robot de traitement d'espaces verts (40) mobile autonome sur la surface (100) à traiter ayant la forme spécifique et la taille (A) spécifique respectivement en fonction de différentes plages de paramètres de commande,
- détermination d'une durée (T) dans laquelle une grande partie de la surface à traiter par le robot de traitement d'espaces verts a été couverte, respectivement pour les différentes plages de paramètres de commande et
- sélection, en tant que plage spécifique de paramètres de commande (SPB), de l'une des différentes plages de paramètres de commande pour laquelle la durée est la plus courte.

6. Procédé selon l'une quelconque des revendications précédentes, le procédé comprenant l'étape suivante :
c) transmission de la plage spécifique de paramètres de commande (SPB) déterminée dans le robot de traitement d'espaces verts (40) mobile autonome.

7. Procédé pour faire fonctionner un robot de traitement d'espaces verts (40) mobile autonome sur une surface (100) à traiter ayant une forme spécifique et une taille (A) spécifique, le procédé comprenant les étapes :
- détermination d'une plage spécifique de paramètres de commande (SPB) du robot de traitement d'espaces verts (40) mobile autonome conformément au procédé selon l'une quelconque des revendications précédentes et
d) commande du mouvement du robot de traitement d'espaces verts sur la surface (100) à traiter ayant la forme spécifique et la taille (A) spécifique en fonction de la plage spécifique de paramètres de commande déterminée.

8. Système (10) destiné à mettre en œuvre un procédé selon l'une des revendications précédentes, le système (10) comprenant :
- un appareil de saisie (20) et
- une unité de calcul (30),
- l'appareil de saisie étant configuré pour prédéfinir une forme spécifique et une taille (A) spécifique d'une surface (100) à traiter et
- l'unité de calcul étant configurée pour coopérer avec l'appareil de saisie et pour déterminer une plage spécifique de paramètres de commande (SPB) d'un robot de traitement d'espaces verts (40) mobile autonome en fonction de la forme spécifique prédéfinie et de la taille spécifique prédéfinie de la surface à traiter.

9. Système (10) selon la revendication 8, le système (10) comprenant :
- un robot de traitement d'espaces verts (40) mobile autonome, le robot de traitement d'espaces verts étant configuré pour commander son mouvement sur la surface (100) à traiter ayant la forme spécifique et la taille (A) spécifique en fonction de la plage spécifique de paramètres de commande (SPB).

10. Système (10) selon la revendication 9,
- le système (10) possédant une interface d'unité de calcul (50) et
- le robot de traitement d'espaces verts (40) mobile autonome possédant une interface de robot (41),
- l'interface d'unité de calcul et l'interface de robot étant configurées pour la transmission de la plage spécifique de paramètres de commande (SPB) déterminée de l'unité de calcul (30) dans le robot de traitement d'espaces verts.

11. Système (10) selon la revendication 9 ou 10,
- l'unité de calcul (30) étant configurée pour déterminer une plage spécifique d'angles d'éloignement (SWB) et/ou une plage spécifique d'angles de rotation (DWB) du robot de traitement d'espaces verts (40) mobile autonome en fonction de la forme spécifique prédéfinie et de la taille (A) spécifique prédéfinie de la surface (100) à traiter et
- le robot de traitement d'espaces verts possédant un appareil de détermination d'angle (42), l'appareil de détermination d'angle étant configuré pour déterminer un angle entre une direction de mouvement du robot de traitement d'espaces verts sur la surface à traiter et une délimitation (101) de la surface, de sorte que le robot de traitement d'espaces verts peut commander son mouvement sur la surface en éloignement de la délimitation sous un angle (α) issu de la plage spécifique d'angles d'éloignement, et/ou
- le robot de traitement d'espaces verts possédant un appareil de détermination d'angle de rotation (48), l'appareil de détermination d'angle de rotation étant configuré pour déterminer un angle de rotation d'une rotation de la direction de mouvement du robot de traitement d'espaces verts sur la surface à traiter au niveau de la délimitation de la surface, de sorte que le robot de traitement d'espaces verts peut commander sa rotation de sa direction de mouvement sur la surface au niveau de la délimitation autour d'un angle de rotation (ε) issu de la plage spécifique d'angles de rotation.

12. Système (10) selon la revendication 11,
- l'appareil de détermination d'angle (42) possédant un arrangement de capteurs de champ magnétique, l'arrangement de capteurs de champ magnétique étant configuré pour reconnaître un champ magnétique (B) d'un fil de délimitation (101) de la surface (100) à traiter, et
- le robot de traitement d'espaces verts (40) mobile autonome étant configuré pour déterminer l'angle (α) au moyen de l'arrangement de capteurs de champ magnétique.

13. Système (10) selon la revendication 11 ou 12,
- l'appareil de détermination d'angle de rotation (48) possédant un appareil d'odométrie et/ou un appareil d'inertie, et
- le robot de traitement d'espaces verts (40) mobile autonome étant configuré pour déterminer l'angle de rotation (ε) au moyen de l'appareil d'odométrie et/ou de l'appareil d'inertie.

14. Système (10) selon l'une quelconque des revendications 9 à 13,
- le robot de traitement d'espaces verts (40) mobile autonome étant configuré sous la forme d'un robot de tonte équipé d'un outil de tonte (43).

15. Robot de traitement d'espaces verts (40) mobile autonome, le robot de traitement d'espaces verts (40) mobile autonome possédant :
- *une interface de robot (41), l'interface de robot étant configurée pour la transmission d'une plage spécifique d'angles d'éloignement (SWB) et*/*ou d'une plage spécifique d'angles de rotation (DWB) **déterminée conformément à un procédé selon la revendication 3 ou une revendication dépendante de la revendication 3** dans le robot de traitement d'espaces verts, et*
- un appareil de détermination d'angle (42), l'appareil de détermination d'angle étant configuré pour déterminer un angle entre une direction d'un mouvement du robot de traitement d'espaces verts sur une surface à traiter (100) ayant une forme spécifique et une taille (A) spécifique et une délimitation (101) de la surface, le robot de traitement d'espaces verts étant configuré pour commander son mouvement sur la surface en éloignement de la délimitation sous un angle (α) issu de la plage spécifique d'angles d'éloignement et/ou
- un appareil de détermination d'angle de rotation (48), l'appareil de détermination d'angle de rotation étant configuré pour déterminer un angle de rotation d'une rotation de la direction de mouvement du robot de traitement d'espaces verts sur la surface à traiter au niveau de la délimitation de la surface, le robot de traitement d'espaces verts étant configuré pour commander sa rotation de sa direction de mouvement sur la surface au niveau de la délimitation autour d'un angle de rotation (ε) issu de la plage spécifique d'angles de rotation.
